# EUROPEAN PATENT APPLICATION

(11) **EP 1 475 525 A2**
(43) Date of publication of application: **10.11.2004**
(21) Application number: 04010818.5
(22) Date of filing: 06.05.2004
(51) Int. Cl.: F02D 35/00, F02D 9/00, F02D 9/10, F02D 11/10, G01B 7/14, G01B 7/30

(54) **Angle sensing device for electronic throttle valve control unit and method of production of said angle sensing device**

(30) Priority: 07.05.2003 JP 2003128545
(71) Applicant: Hitachi, Ltd., Chiyoda-ku, Tokyo 101-8010 (JP)
(72) Inventor: Takahara, Hidehiko, Chiyoda-ku Tokyo 100-8220 (JP)
(74) Representative: Beetz & Partner Patentanwälte

(57) **Abstract**

The invention relates to a sensor and an electronic throttle valve unit using said sensor, wherein at least two arcuate magnetic circuitry members (13, 14) are installed along the rotation axis of the throttle valve shaft (3) as if the arcuate magnet fixed on the throttle valve shaft (3) is positioned between them. Members (13, 17) constituting the magnetic circuitry are mounted on the resin gear cover (16) to be installed on the body (1) of the EC throttle. Magnetic material (for example, sintered metal) used for the magnet is included in the resin molded gear members (12) to be fixed on the throttle valve shaft (3), and then when the resin cools down, the magnetic material (for example, sintered metal) is subjected to intense magnet force and magnetized. Control parameters of an internal combustion engine are adjusted according to how much the arcuate magnet fixed on the throttle valve shaft (3) is moved into or out of the arcuate groove formed by the arcuate magnetic circuitry members.

## Description

### BACKGROUND OF THE INVENTION

The present invention relates to a rotation angle sensing device that senses the rotation angle of a rotating body, particularly to a rotation angle sensing device that uses an element inductive to magnet. This invention also relates to an electronic control throttle valve unit (hereinafter may also be called the EC throttle) equipped with a rotation angle sensing device of the throttle valve shaft and driven by a motor.

The invention furthermore relates to an internal combustion engine of which control parameters are adjusted according to the signal sensed by an electromagnetic device like the above.

According to a prior art disclosed in the Japanese Laid-Open Patent Publication No. 2001-272205, a pair of stator segments opposed to each other are supported by casing members formed on the throttle body.

The pair of arcuate stator segments are positioned each inside and outside the circumference with an arcuate magnet between them, forming a magnetic circuitry.

An arcuate air gap is formed between the pair of arcuate stator segments and the arcuate magnet fixed on the throttle valve is moved into and out of the air gap.

### SUMMARY OF THE INVENTION

With the above prior art, however, in the arcuate magnetic circuitry formed by the pair of arcuate stator segments installed each inside and outside the circumference, the length of the magnetic path is different between the inside and the outside. Because of this construction, primary linear output cannot be obtained easily, and hence a range of angle where linear sensor output can be obtained is very narrow.

Because the magnetic circuitry members are mounted on the throttle body of the EC throttle, it is not easy to assemble.

It is not easy to obtain linear sensor output in a wide range, and hence the parameters of an internal combustion engine cannot be adjusted with high accuracy.

An arcuate magnet can be fixed on the rotation shaft (throttle valve shaft), which is an object to be sensed, and/or at least two arcuate magnetic circuitry members can be installed along the axis of the rotation shaft (throttle valve shaft) as if the magnet is positioned between them. Members constituting the magnetic circuitry can be mounted on the resin gear cover installed on the body of the EC throttle.

Magnetic material (for example, sintered metal) used for the magnet can be included in the resin molded gear members to be fixed on the throttle valve shaft, and then when the resin cools down, the magnetic material (for example, sintered metal) is subjected to intense magnet force and magnetized.

Control parameters of an internal combustion engine are adjusted according to how much the arcuate magnet fixed on the throttle valve shaft is moved into or out of the arcuate groove formed by the arcuate magnetic circuitry members.

### BRIEF DESCRIPTION OF THE DRAWINGS

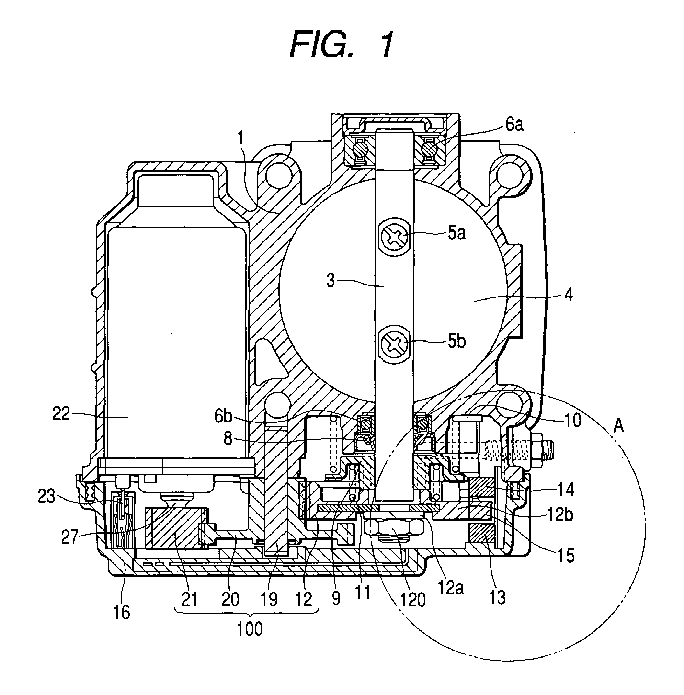

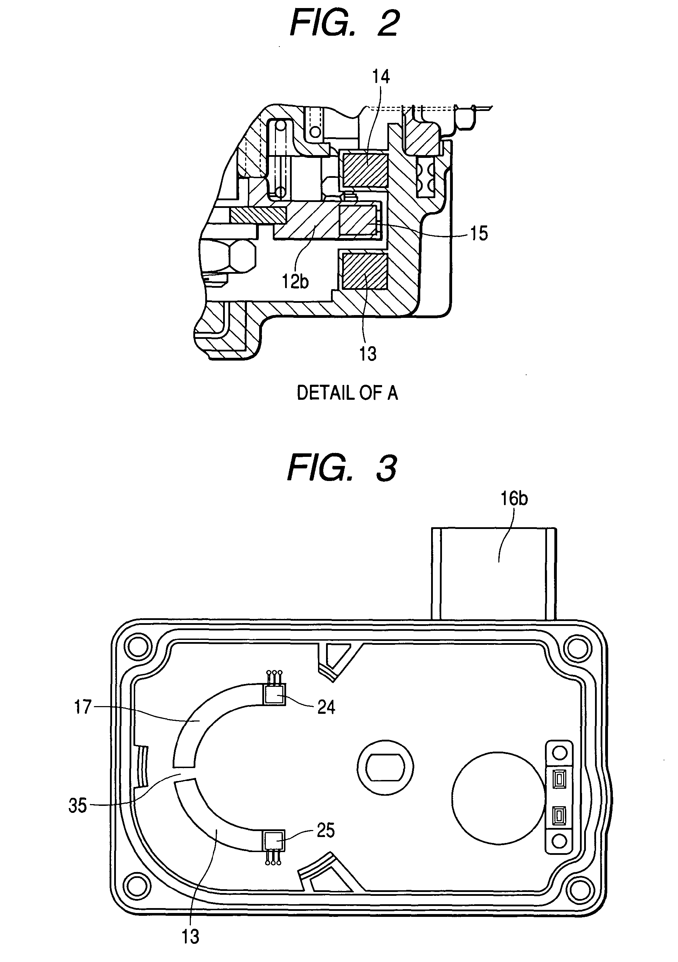

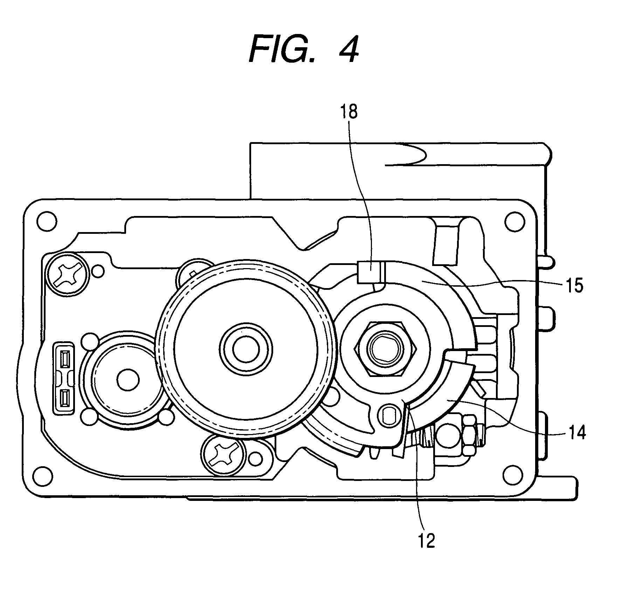

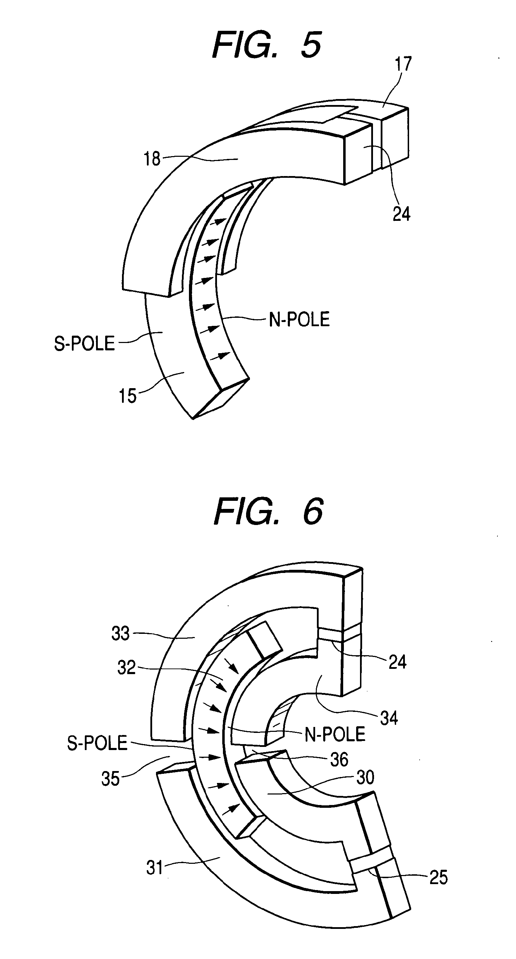

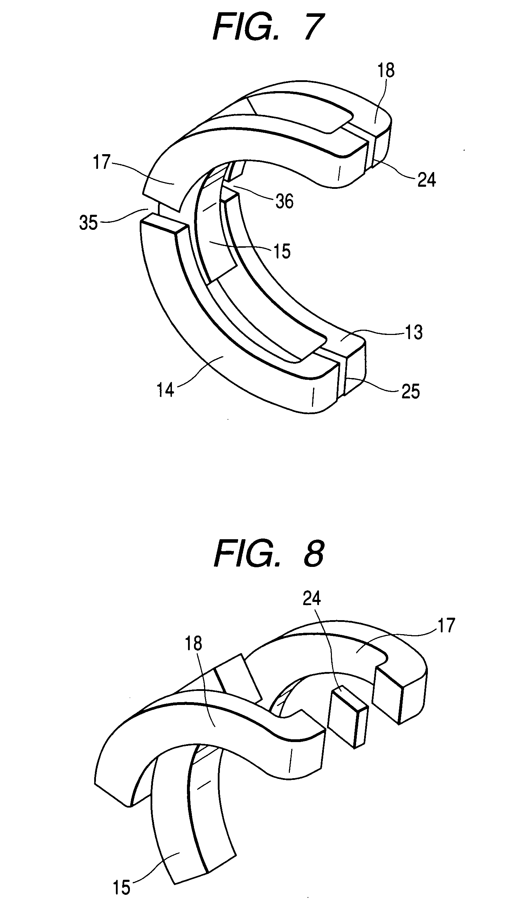

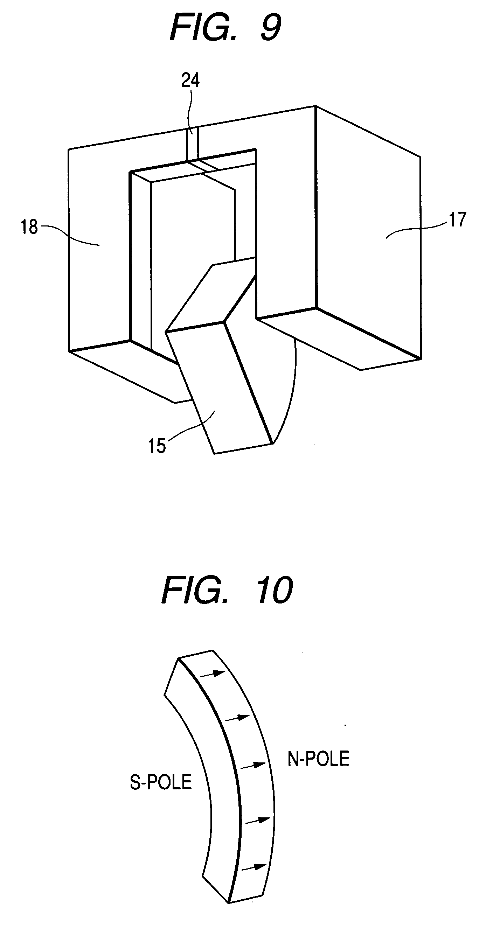

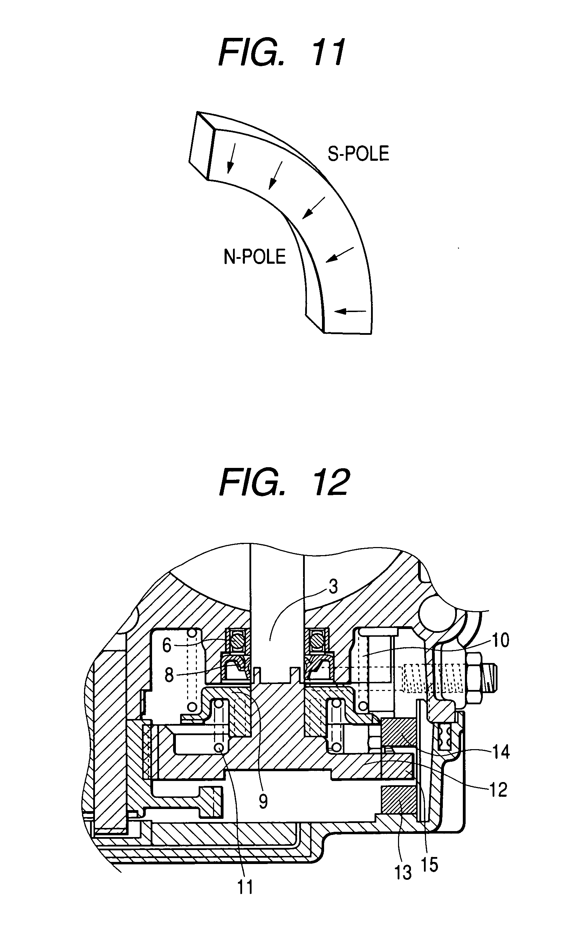

Fig. 1 is a cross-sectional view of an embodiment of the present invention mounted on a throttle valve controller; Fig. 2 is an example where the embodiment is mounted on an EC throttle controller (Detail A of Fig. 1); Fig. 3 is an example of mounting the EC throttle (without cover); Fig. 4 is an example of mounting the EC throttle (without cover); Fig. 5 is an oblique view of the embodiment of the present invention; Fig. 6 is an oblique view of the embodiment of the present invention having two output lines; Fig. 7 is an oblique view of sensor having two output lines according to the embodiment of the present invention; Fig. 8 is an oblique view of the embodiment of the present invention; Fig. 9 is an oblique view of another embodiment of the present invention; Fig. 10 is magnet of the present invention; Fig. 11 is magnet of the present invention; and Fig. 12 is the embodiment of final gear for mounting the present invention.

### DESCRIPTION OF THE PREFERRED EMBODIMENTS

Embodiments of the present invention are described hereunder, using figures. As shown in Fig. 1, the electronic control throttle valve unit (throttle valve unit) mainly comprises throttle body (hereinafter may also be called simply as the body) 1, throttle valve 4, motor (throttle valve drive; electric actuator) 22 for driving the throttle valve 4, reduction gear mechanism 100, and cover 16 for protecting the throttle valve shaft 3, motor 22 and reduction mechanism 100.

The throttle valve 4 is mounted on the throttle valve shaft 3 with screws 5, and the throttle valve shaft 3 is supported by the bearing 6 attached to the body 1. One end of the throttle valve shaft 3 projects out of the side wall of the body 1. On the projected end of the throttle valve shaft outside the wall, spring 10, lever 9, spring 11 and the final gear (driven gear) 12 of the reduction gear mechanism 100 are mounted, about which description is made later.

The throttle valve shaft 3 and the final gear (driven gear) 12 of the reduction gear mechanism 100 are so connected that their angle to each other does not shift. Accordingly, the throttle valve 4 and final gear 12 have the same displacement angle and they are synchronized with each other in terms of angle.

Components related to the throttle valve such as throttle valve shaft 3, reduction gear mechanism 100 and motor 22 (hereinafter called the throttle valve mechanism) are contained in a storage section provided on the side wall of the body 1 and the storage section is covered by a synthetic resin cover 16.

The cover 16 is molded out of resin mixed with magnetic force isolation material powder so that the disturbance of the electromagnetic wave falling over the EC throttle does not enter inside the cover 16.

The cover is molded over a magnetic force isolation plate out of resin material mixed with a specified amount of at lease one of the magnetic force isolation materials, Permalloy powder, Sendust cast powder and Fe-B amorphous powder. The magnetic force isolation plate produced as above shows higher productivity than a magnetic force isolation plate that is resin molded over a metallic plate having magnetic force isolation characteristic. In concrete terms, neither positioning process nor machining process of the isolation plate itself is needed.

The motor 22 is driven according to an acceleration signal, relating to the depth of pushing down the accelerator pedal, traction control signal, constant speed drive signal, and idling speed control signal, and the power of the motor 22 is transmitted to the throttle valve shaft 3 via the reduction gear mechanism 100 (motor pinion 21, intermediate gear 20 and final gear 12). The pinion 21 is attached to the motor shaft 27 and the intermediate gear 20 engages freely with the conductive shaft 19 attached to the throttle body 1. The major gear 20a of the intermediate gear 20 engages with the pinion 21 and the minor gear 20b engages with the final gear 12.

The final gear 12 is a fan-shaped resin gear. A metallic plate 12a is attached to the end of the throttle valve shaft 3 with bolt 120. The metallic plate 12a has some holes in it so that resin flows over both sides of the metallic plate in resin molding. Thus, the fan-shaped final gear 12 is resin molded.

The magnet 15 (32) is mounted by resin molding at a position apart circumferentially from the final gear 12 by 180 degrees. The relationship between the final gear 12 and lever 9 is as follows. The final gear 12, so provided with a hole into which one end of the throttle valve shaft 3 is inserted that the hole can fit with the end (having at least two flat faces) of the throttle valve shaft 3, rotates along with the throttle valve shaft 3.

The lever 9, which engages freely with the outside circumference (circumferential surface) of the throttle valve shaft 3, is connected to the final gear 12 with the spring 11 so that they are pulled towards each other. The spring 10 is a return spring of the throttle valve; one end is hooked on a spring hook (not shown) attached to the body 1 and the other end is hooked on the lever 9.

The spring 10 gives a return force to the throttle valve shaft via the lever 9 and final gear 12. Furthermore, it constitutes a well-known, so-called default opening setting mechanism. Default opening setting mechanism is to maintain the initial opening of the throttle valve 4 at an opening greater than the fully closed position in case the engine key is turned off or the motor 22, an electric actuator is not energized, for example in case of a failure in an electric power line.

In a range from the default opening position to the fully opened control position, the throttle valve opening is determined by the balance between the torque of the motor 22 and valve closing force of the spring (return spring) 10.

In case the throttle valve opening is controlled smaller than the default opening, motion of the lever 9 is controlled by a default opening stopper (not shown) and only the final gear 12 and throttle valve shaft 3 are rotated towards the fully closed position in opposition to the force of the spring 11.

The rotation angle sensing device comprises the arcuate magnet 15 mounted on the final gear 12, stators 13 and 14 constituting at least two magnetic circuitry members installed along the rotation axis of the throttle valve 3 on the inside of the peripheral wall of the cover 16 as if the magnet 15 is positioned between them, and at lease one Hall element 25 so mounted on the cover 16 as to be positioned between the ends of the two magnetic circuitry members, and the arcuate magnet 15 is moved into and out of an arcuate gap (arcuate groove) between the stators 13 and 14 constituting two magnetic circuitry members, as the final gear 12 rotates.

With a conventional design where the magnetic circuitry is so constructed that an arcuate magnet is positioned concentrically between the inside and outside of the circumference and a magnet magnetized in parallel is used, because the variation of the magnetic flux through the stators 30, 31, 33 and 34 constituting the magnetic circuitry members as against the rotation of the valve is not constant, it is difficult to obtain linear rotation angle sensor output and a range of angle where linear sensor output can be obtained is narrow.

According to this embodiment, however, because a magnet 15 energized in parallel as shown in Fig. 10, of which polar surface is formed on the surface facing the stator 13, 14, 17 and 18 constituting the magnetic circuitry members, is employed, linear rotation angle sensor output can be obtained in accordance with the rotation of the throttle valve 4. Thus, highly reliable product can be produced.

If the inside space of the cover 16 of the EC throttle is not enough for installing the magnetic circuitry members and sensors, the magnetic circuitry members are fixed inside the surface of the cover 16 perpendicular to the throttle valve shaft 3 so that the magnet 15 is positioned between the inside and outside of the circumference concentric with the throttle valve shaft 3 (see Fig. 6), and a magnet 32, which is magnetized radially so that the magnetic flux density is different between the inside and outside arc of the magnet 32 as shown in Fig. 11, is employed. Thus, linear rotation angle sensor output can be obtained in accordance with the rotation of the throttle valve 4.

With a construction where the magnetic circuitry members are fixed on the cover 16 covering the gear as above, the magnetic circuitry members can be installed easily. In particular, since magnetic circuitry member can be resin molded into one piece with the cover to be molded, much better workability can be achieved.

With a construction as shown in Fig. 6 and Fig. 7 where the stators 17 (33) and 18 (34), constituting another pair of magnetic circuitry members installed as if the magnet 15 (32) is positioned between them, and Hall element 24 are provided in the opposite direction but on the same axis of the magnetic circuitry comprising the stators 13 (30) and 14 (31) constituting the magnetic circuitry members and Hall element 25, not only the rotation angle sensor output can be obtained from two lines but also two magnetic circuitries can be formed using one magnet 15 (32). Each space 35 and 36 is provided between the two magnetic circuitries so that no magnetic flux flows between the two magnetic circuitries and each stands completely independently. It is allowable to fill the space 35 and 36 with magnetic force isolation material.

With a conventional rotation angle sensing device, because two Hall elements are mounted on a magnetic circuitry, the device can remain functional only in case the Hall element 25 has failed. With this embodiment, however, because the Hall element and magnetic circuitry are mounted in two separate lines, the device can remain functional in case either the Hall element 24 or 25 has failed and also in case a magnetic circuitry itself has failed.

Furthermore, in case of the rotation angle sensing device which is provided with only a single line of magnetic circuitry where the arcuate magnet 15 (32) is positioned between the inside and outside of the circumference or in the direction of the throttle valve shaft 3, the magnet 15 (32) projecting out of the magnetic circuitry disturbs the magnetic field around it, and hence gives adverse impact on the magnetic circuitry itself. In case of the rotation angle sensing device equipped with two lines of magnetic circuitries like the one according to this embodiment, because the magnet 15 (32) projecting out of one magnetic circuitry is moved into the other magnetic circuitry, it does not disturb the magnetic field around it, and hence the rotation angle sensing accuracy improves.

The magnetic circuitry members (stators) 13 (30), 14 (31), 17 (33) and 18 (34) and magnet 15 are arcuate and all located on the same circumferential plane, and the circumferential angle is greater than the rotation angle of the valve. At the portion for mounting each Hall element 24 and 25, located at the end of the magnetic circuitry members (stators) 13 (30), 14 (31), 17 (33) and 18 (34), the direction of the magnetic force line must be turned so that the magnetic force line running in the arcuate direction through the magnetic circuitry members (stators) 13 (30), 14 (31), 17 (33) and 18 (34) passes through the Hall element 24 and 25.

To serve this purpose, the magnetic circuitry members (stators) 13 (30), 14 (31), 17 (33) and 18 (34) themselves are slightly extended towards the Hall element 24 and 25.

In addition, in turning the magnetic circuitry members (stators) 13 (30), 14 (31), 17 (33) and 18 (34) from the circumferential direction towards the Hall element 24 and 25, it is desirable that they are not bent at a sharp angle but rounded at a larger radius as shown in Fig. 7 and Fig. 8. This enables to reduce leakage of the magnetic flux from the bending and improve the accuracy of the magnetic flux quantity passing through the Hall element 24 and 25.

In addition, if the opposed area between the magnetic circuitry member (stator) 13 (30), 14 (31), 17 (33) and 18 (34) and magnet 15 (32) can remain proportional in terms of the rotation angle of the valve, their shape may not necessary be arcuate as shown in Fig. 9.

In a rotation angle detection device equipped with two lines of magnetic circuitries, it is desirable that the circumferential angle of the magnet 15 (32) is made larger so that, while the magnet 15 (32) is moved into the utmost of one circuitry, some magnetic flux still runs in the other magnetic circuitry. This measure is to prevent reduction of the magnet flux quantity passing through the Hall element 24 or 25, which is caused as the magnetic flux runs from the magnetic circuitry of which the magnet 15 (32) is moved into the utmost to the other magnetic circuitry.

The surface of the magnet 15 (32) facing the magnetic circuitry member (stator) 13 (30), 14 (31), 17 (33) and 18 (34) is made each polar surface. The N-pole and S-pole can be on either side.

In consideration that the final gear 12 is made from resin, it is desirable that the magnet 15 (32) is fixed by including it partly of wholly into one piece with the gear to be molded. If the magnet 15 (32) is completely included in the resin, it can be expected that the magnet is protected from any external force or effect.

Since a vendor who magnetizes the magnet 15 (32) and a vendor who molds the final gear 12 are different, it is a general practice in view of transporting the magnet 15 (32) that a magnetized magnet 15 (32) is brought into the molding vendor's premises for inclusion into one piece to be molded.

However, because resin is poured into a mold at high temperature and high pressure in the process of including the magnet 15 (32) into one piece to be resin molded, the characteristic of the magnetized magnet 15 (32) may be deteriorated and required magnetic force cannot be achieved easily.

In addition, since the temperature reduction varies depending upon the gate position or resin flow, it is difficult to predict the deterioration of the magnetic force. Accordingly, an expensive magnet 15 (32) made of, for example, neodymium that exhibits greater magnetic force from the beginning is needed. In this embodiment, since a magnetic material before being magnetized is include into one piece with the resin molded final gear 12 beforehand and then magnetized, deterioration of the magnetic force due to heat can be reduced and so necessary magnetic force can be obtained even with a relatively less-expensive magnet 15 (32) made of ferrite.

In this embodiment, the magnet 15 (32) for the EC throttle is installed on the final gear 12 at a position apart from the motor 22. It is installed, for example, at a position opposite to the tooth block of the final gear 12 by an angle of about 180 degrees.

Thus, the magnet can be set apart from the motor 22 that drives the throttle valve shaft and so the effect of the magnetic field variation caused by the motor 22 upon the magnetic circuitry of the sensor can be reduced.

When the throttle valve shaft 3 rotates and consequently the magnet 15 (32) rotates, the Hall element 24 and 25 senses the change in the magnetic field and generates a Hall voltage.

It is permissible that the Hall element 24 and 25 and magnetic circuitry members (stators) 13 (30), 14 (31), 17 (33) and 18 (34) are fixed on the cover 16 and partly or wholly included into one piece with the cover 16 to be molded as shown in Fig. 2. With this construction, it can be expected that the magnetic circuitry members (stators) 13 (30), 14 (31), 17 (33) and 18 (34) are prevented from falling down and the Hall element is protected.

The magnetism sensing device 24 and 25 (Hall element) can be connected to a conductor that is mechanically fixed by being included into one piece with the resin molded cover 16 so as to send a signal to an external device via the electric terminal (connected to the conductor) of the connector 16b which is also included into one piece with the resin molded cover 16.

The engine control unit of a motor vehicle is equipped with a coupler and signal line to be connected to the connector 16b, and the output signal from the Hall element 24 and 25 is inputted into the engine control unit.

The control unit corrects the control parameters of the internal combustion engine, including the fuel injection pulse width and throttle valve opening, and controls the change-speed point of the auto transmission based on the electrical signal corresponding to the change in the magnetic field or on the electrical signal and at least one other electrical signal, such as a signal indicating the vehicle speed, where the change in the magnetic field is the change in the magnetic physical quantity that varies depending upon how much the magnet 15 (32) and the magnetic circuitry members (stators) 13 (30), 14 (31), 17 (33) and 18 (34) overlap or how much the magnet 15 (32) is moved into the arcuate gap (groove) formed by the magnetic circuitry members (stators) 13 (30), 14 (31), 17 (33) and 18 (34).

As explained above, in a motor vehicle equipped with the throttle controller according to this embodiment, control parameters of the engine is adjusted in accordance with the change in the electrical signal, corresponding to the opening of the throttle valve shaft, that is outputted from the Hall element 24 and 25 in accordance with the magnetic signal change resulting from the positional relationship between the arcuate magnet 15 mounted on the end of the throttle valve shaft and the arcuate magnet circuitry members.

Because the sensor is a non-contact type and so the opening signal of the throttle valve 4, which is outputted from the Hall element 24 and 25 as the change in the electrical signal, has little factor of aging. Thus, exact adjustment of the control parameters of the internal combustion engine can be maintained for a long period of time.

Because the final gear 12 is made of synthetic resin, the final gear 12 does not give any adverse impact upon the magnetic field generated by the magnet 15 (32). In this embodiment, a metallic plate is used as the center portion that engages with the throttle valve shaft 3. However, if the whole gear is molded out of resin and the engagement between the throttle valve shaft 3 and final gear 12 is positioned inside the spring 10 that is made of magnetic material as shown in Fig. 12, disturbance of the magnetic field is absorbed by the spring 10 and so magnetic adverse impact can further be eliminated.

Since the magnetic field does not become partial even if the shape of the final gear is irregular such as fan-shaped, the induction characteristic of the Hall element 24 and 25 can always be constant irrespective of the rotation angle of the throttle shaft.

In addition, the magnetism sensing device can be made compact since it is made into a fan shape and installed outside the intermediate gear.

Because the rotation bearing shaft of the intermediate gear 20 located between the motor 22 and magnetic type non-contact sensor is made of magnetic material, electromagnetic effect resulting from the change in the drive current of the motor 22 can be expected to be shielded by the rotation bearing shaft 19, and so the Hall element 24 and 25 hardly receives the electromagnetic effect of the motor 22 and the sensing accuracy of the Hall element 24 and 25 can hardly be disturbed.

According to the present embodiment, the following problems involved in the prior art as disclosed in the Japanese Application Patent Laid-Open Publication No. 2001-272205 can be solved.

For the magnetic circuitry according to the Japanese Application Patent Laid-Open Publication No. 2001-272205, where an arcuate magnet is positioned between the inside and outside of the circumference, polar surfaces of the magnet are described but the direction is not shown. In a conventional design where a magnet magnetized in parallel is used, because the change in the magnetic flux through the magnetic circuitry members corresponding to the rotation of the valve is not constant, linear rotation angle sensor output corresponding to the rotation of the valve cannot be obtained easily, and hence a range of angle where linear sensor output can be obtained is very narrow.

For a motor vehicle or internal combustion engine, throttle body is an essential component that determines the vehicle speed and output torque.

Thus, in the well-known EC throttle, the throttle valve is controlled by the feedback sensor according to electrical signals needs to have high accuracy and reliability.

In order to increase the reliability, it is a general practice to add another feedback sensor system.

The Japanese Application Patent Laid-Open Publication No. 2001-272205 describes that a magnetic circuitry of the rotation angle sensing device having two output lines comprises at least one magnet, at least two magnetic circuitries and at lease one Hall element, but how it is constructed is not shown and so its effect is uncertain.

In a conventional design, a rotation angle sensing device having two output lines uses two Hall elements to be mounted in a single magnetic circuitry. Because the device has only one magnetic circuitry, it cannot remain functional in case of a failure of the magnetic circuitry itself such as falling down or corrosion of the magnetic circuitry members.

As compared to the above, in this embodiment, a sensing device having two lines can be constructed easily and, even in case of a failure of one sensor, the other sensor can back up the function of the device.

In addition, in a rotation angle sensing device having only a single line as disclosed in the Japanese Application Patent Laid-Open Publication No. 2001-272205, the magnet projecting out of the magnetic circuitry disturbs the magnetic field space around it and gives an adverse impact upon the magnetic circuitry itself, resulting in the deterioration of the rotation angle sensing accuracy. As compared to the above, according to this embodiment, the magnet can be contained inside the gap of the stator regardless of wherever it is positioned, and hence the magnet does not disturb the magnetic field space around it and gives no adverse impact upon the magnetic circuitry itself.

Furthermore, according to the prior art, since a vendor who magnetizes the magnet and a vendor who molds with resin are different, it is a general practice that a magnetized magnet is brought into the molding vendor's premises for inclusion into one piece to be molded.

However, because resin is poured into a mold at high temperature and high pressure in the process of including the magnet into one piece to be resin molded, the characteristic of the magnetized magnet may be deteriorated and required magnetic force cannot be achieved easily.

In addition, since the temperature reduction varies depending upon the gate position or resin flow, it is difficult to predict the deterioration of the magnetic force, and hence the characteristic of the magnet after molding differs from piece to piece.

Accordingly, an expensive magnet made of, for example, neodymium that exhibits greater magnetic force from the beginning is needed.

As compared to the above, in the method of production according to this embodiment, because the magnetic material is magnetized after being fixed on the gear member, the device manufactured in this method does not cause any change in the characteristic and deterioration of the magnetic force. Accordingly, a less-expensive magnet can be employed.

In this embodiment, the distance between the magnet and magnetic circuitry members is kept constant so that the opposed area between the magnet and magnetic circuitry members is changed proportionally corresponding to the change of the angle of the object to be sensed. Thus, the output voltage of the Hall element can be changed proportionally corresponding to the change of the angle of the object to be sensed.

According to the present invention, it becomes possible to realize a sensor with an output characteristic that the output signal of the sensing element can be changed proportionally corresponding to the change of the angle of the object to be sensed and that the range of angle where a linear sensor output can be obtained is wide.

It becomes possible to realize an EC throttle in which an electromagnetic type throttle valve shaft opening sensor is installed compactly between the resin cover to be mounted on the throttle body and the reduction gear.

It also becomes possible to realize an internal combustion engine that exhibits excellent control accuracy because the control parameters of the engine can be adjusted in accordance with the throttle opening signal that hardly ages.

## Claims

1. A sensor for electromagnetically sensing the rotation angle of the throttle valve shaft (3) supported by a throttle body (1), which comprises at least one magnetic induction element installed in the middle of the magnetic path of at least a pair of stators (13, 14, 17, 18) constituting a magnetic circuitry, of which element outputs an electrical signal indicating the rotation angle of the throttle valve shaft (3); comprising
a cover (16), mounted on the throttle body (1), that covers the end of the throttle valve shaft (3),
at least a pair of stators (13, 17), mounted on the cover (16), that form an arcuate groove around the throttle valve shaft (3), and
a magnet rotor, fixed on the throttle valve shaft (3), that moves along in the arcuate groove without contacting any of the stators (13, 14, 17, 18).

2. A sensor for sensing the rotation angle of the throttle valve shaft according to Claim 1, wherein the pair(s) of stators (13, 14; 17, 18) are installed along the axis of the throttle valve shaft (3).

3. A sensor for sensing the rotation angle of the throttle valve shaft according to Claim 1 or 2, wherein the pair(s) of stators (13, 14; 17, 18) are installed concentrically around the throttle valve shaft (3).

4. An electronic control throttle valve unit for transmitting motor rotation to the throttle valve shaft (3) via reduction gears (100) to operate the throttle valve (4), which comprises a sensor for electromagnetically sensing the rotation angle of the throttle valve shaft (3) supported by a throttle body (1), of which sensor comprises at least one magnetic induction element installed in the middle of the magnetic path of at least a pair of stators (13, 14, 17, 18) constituting a magnetic circuitry, of which element outputs an electrical signal indicating the rotation angle of the throttle valve shaft (3), equipped with a gear cover (16), mounted on the throttle body (1), that covers the reduction gears (100); comprising
at least a pair of stators (13, 17), mounted on the gear cover (16), that form an arcuate groove around the rotation axis of the throttle valve shaft (3), and
a magnet rotor, fixed on a member constituting one of the reduction gears fixed on the throttle valve shaft (3), that moves along in the arcuate groove without contacting any of the stators.

5. An electronic control throttle valve unit according to Claim 4, wherein a member (12) constituting one of the reduction gears (100) fixed on the throttle valve shaft (3) includes
metallic plate (12a) fixed on the throttle valve shaft (3),
resin gear molded from resin over the metallic plate (12a), and
magnet (15) fixed on the metallic plate (12a) via a resin layer.

6. An electronic control throttle valve unit according to Claim 4 or 5, wherein the gear cover (16) is molded from resin, and
at least the pair of stators (13, 17) are molded into one piece with the resin molded gear cover (16).

7. An electronic control throttle valve unit according to at least one of Claims 4 to 6, wherein the gear cover (16) includes a peripheral wall extending along the throttle valve shaft (3) and a wall perpendicular to the throttle valve shaft (3), and
the pair(s) of stators (13, 17) are molded into one piece with the inside of the peripheral wall of the resin molded gear cover (16).

8. An electronic control throttle valve unit according to at least one of Claims 4 to 7, wherein the gear cover (16) includes a peripheral wall extending along the throttle valve shaft and a side wall perpendicular to the throttle valve shaft, and
the pair(s) of stators (13, 17) are molded into one piece with the inside of the wall, perpendicular to the throttle valve shaft (3), of the resin molded gear cover (16) .

9. An electronic control throttle valve unit comprising throttle valve shaft (3) rotated by an electric actuator (22), magnet (15) mounted on the throttle valve shaft (3), at least two magnetic circuitry members constituting a magnetic circuitry, and a cover (16) to mount an element for detecting the magnetic flux of the magnetic circuitry, the cover (16) being fixed on the throttle body (1) mounting the electric actuator (22), wherein
at least the two magnetic circuitry members are installed in parallel to the throttle valve shaft (3) so as to position the magnet (15) between them, and
the magnet (15) is moved into or out of the magnet circuitry members forming an open circuitry as the throttle valve shaft (3) rotates.

10. A rotation angle sensing device comprising magnet mounted on an object to be sensed, at least two magnetic circuitry members constituting a magnetic circuitry and being fixed so as not to be moved by the rotation of the object to be sensed, and an element detecting the magnetic flux of the magnetic circuitry fixed so as not to be moved by the rotation of the object to be sensed, wherein
at least the two magnetic circuitry members are installed along the rotation shaft of the object to be sensed so as to position the magnet between them, and
the magnet is moved into or out of the magnet circuitry members forming an open circuitry as the object to be sensed rotates.

11. An electronic control throttle valve unit comprising throttle valve shaft (3) rotated by an electric actuator (22), magnet mounted on the throttle valve shaft (3), at least two magnetic circuitry members constituting a magnetic circuitry, and a cover (16) mounting an element detecting the magnetic flux of the magnetic circuitry, the cover (16) being fixed on the throttle body mounting the electric actuator (22), wherein
at least two magnetic circuitry members are installed each inside and outside the radially magnetized arcuate magnet (15) so as to position the magnet between them, and
the magnet (15) is moved into or out of the magnet circuitry members as the throttle valve shaft (3) rotates.

12. An electronic control throttle valve unit according to Claim 9, wherein
at least two arcuate magnetic circuitry members are installed in the direction perpendicular to the throttle valve shaft (3) so as to position the arcuate magnet coaxially between them, and
the magnet (15) is moved into or out of the magnet circuitry members forming an open circuitry as the throttle valve shaft (3) rotates.

13. An electronic control throttle valve unit according to Claim 9 or 12, wherein
at least two arcuate magnetic circuitry members are installed, separately from the magnet (15), magnetic circuitry members and magnetic flux detecting element, in the same direction of the magnetic circuitry members so as to position the magnet coaxially between them, and
the magnet (15) is moved into or out of the magnet circuitry members forming an open circuitry as the throttle valve shaft (3) rotates.

14. Method of production for a rotation angle sensor for a throttle valve shaft (3), including a magnet (15) mounted on the gear member (12) fixed on the throttle valve shaft (3), that electromagnetically senses the rotation angle of the throttle valve shaft (3), wherein part of the magnet (15) in the form of a magnetic substance before being magnetized is at least included in the gear member (12) to be molded, and then the substance is magnetized.

15. An internal combustion engine wherein arcuate magnet is fixed on a throttle valve shaft (3) and at least two arcuate magnetic circuitry members are installed along the throttle valve shaft (3) so as to position the arcuate magnet between them, and control parameters are adjusted based on a signal corresponding to how much the arcuate magnet (15) is moved into or out of the arcuate groove formed by the arcuate magnetic circuitry members.
